# EUROPEAN PATENT SPECIFICATION

(11) **EP 2 127 121 B1**
(45) Date of publication and mention of the grant of the patent: **04.05.2016**
(21) Application number: 08725132.8
(22) Date of filing: 02.02.2008
(51) Int. Cl.: H04B 7/06, H04B 5/00, G06K 7/00, G07G 1/00, G06K 17/00

(54) **ITEM LEVEL INVENTORY WITH A RADIO FREQUENCY IDENTIFICATION (RFID) SYSTEM**
ELEMENTSTUFENBESTAND MIT EINEM RFID-SYSTEM
INVENTAIRE AU NIVEAU DES ARTICLES AVEC SYSTÈME DE RADIO-IDENTIFICATION (RFID)

(30) Priority: 02.02.2007 US 701714
(43) Date of publication of application: 02.12.2009
(73) Proprietor: Tyco Fire & Security GmbH, 8212 Neuhausen am Rheinfall (CH)
(72) Inventor: ALEXIS, Mark, Wellington, FL 33414 (US); SHAFER, Gary, Mark, Charlotte, NC 28277 (US)
(74) Representative: Hafner, Dieter
(86) International application number: PCT/US2008/001453
(87) International publication number: WO 2008/097509

(56) References cited:
- WO-A-2008/033223
- US-A1- 2002 183 882
- US-A1- 2005 219 050
- US-A1- 2006 017 634

## Description

### BACKGROUND OF THE INVENTION

### Field of the Invention

This invention relates generally to radio frequency identification (RFID) systems, and more particularly, to RFID systems that acquire information from each of a plurality of items.

### Description of the Related Art

Radio frequency identification (RFID) systems are used in many different applications including for example, in retail environments to obtain information relating to items tagged with RFID identifiers. For example, an RFID tag can be attached or integrated within a product or product packaging. Using an RFID interrogator, which may be a fixed, portable or handheld device, RFID tags within the interrogation zone of the interrogator may be activated and provide information regarding the item associated with the RFID tag (e.g., inventory information, product descriptor, serial number, location, etc.). These RFID tags receive and respond to radio frequency (RF) signals to provide the information. In general, modulators of the RFID tags may transmit back a signal using a transmitter or reflect back a signal to the RFID readers. Additionally, information may be communicated to the RFID tags (e.g., encoding information) using RFID encoders. Thus, RFID systems may be used to monitor the inventory of products in a retail environment and provide product identification using the storage and remote retrieval of data using RFID tags or transponders.

RFID systems include RFID readers that can detect and receive information from a large number of RFID tags at the same time. Additionally, RFID readers can transmit and receive at the same time on the same frequency. For example, in a retail environment using an RFID system to track inventory, it is known to provide numerous read points that each include the use of RF multiplexers and numerous cables to connect to each read point. Further, in such known systems a separate communication and control system is typically needed to manage and control the RF multiplexers. Thus, the cost and complexity of these RF ID systems is typically high. Further, the time and complexity to install the components also may be high, for example, when having to install bulky cable harnesses, etc. Also, it is often difficult, if not impossible, to obtain a complete inventory of, for example, a complete pallet because of the material used to package the contents. For example, metal foil or metalized plastic films and/or RF absorbent material may be and are commonly used in the packaging of pharmaceuticals and food products. This packaging can shield the passive RFID tags attached to the products within the packaging. Thus, often only the outer layer of RFID tags can be read using the known RFID systems and information acquisition methods. Accordingly, the breaking or opening of the pallet or case is often needed to examine the contents and confirm the inventory.

It is also known to use multiple RFID interrogators in such systems to monitor RFID tags in different locations. The use of multiple RPID interrogators also adds cost and complexity to the system. Further, the RFID interrogators may have to be moved in order to interrogate an entire area. For example, individual RFID interrogators may have to be constantly moved to interrogate an entire shelf or shelf unit. This adds time and cost when performing, for example, an RPID inventory.

US 2005/0219050 A1 discloses that RFID tags and an antenna grid are used for automatic determination of cable connections, An RF antenna grid is advantageously employed on a device having a plurality of device ports which may, for example, be physically organized in a two-dimensional arrangement. A method is disclosed for performing a Radio Frequency Identification RFD inventory, the method comprising selectively controlling with an RF signal each of a plurality of multiplexers connected to a plurality of local antennas, selectively enabling with an RF signal the plurality of local antennas using the plurality of multiplexers to perform RFID interrogation on a plurality of RFID tags and acquiring inventory information based on the RFID interrogation.

US 2002/0183882 A1 discloses a method and a system for providing point-of-sale and point-of-delivery and/or distribution of products in a restricted access unit near the customer. The method and system utilize products equipped with RFID tags and reduce the effect of energy sharing, shadowing, and nulls.

US 2006/0017634 A1 discloses an antenna array for RFID antennas for large cohesive detection spaces, having an operating frequency between 100 kHz and 30 MHz. This antenna array can be connected with at least one reader. The antenna array may include at least two antennas that are disposed in a plane, in such a manner that the antenna loops of the individual antennas overlap.

WO 2008/033223 A2 (under Art. 54 III) discloses a radio frequency identification RFID system for item level inventory. The system includes an RFID interrogator, at least one interrogator antenna and at least one local antenna configured to communicate with RFID tags. The RFID system further may include a multiplexer connected to the at least one local antenna and configured to receive power from an RF signal generated by the RFID interrogator and transmitted wirelessly from the interrogator antenna.

### BRIEF DESCRIPTION OF THE INVENTION

A method for performing a radio frequency identification (RFID) inventory may be provided. The method may include selectively controlling with an RF signal each of a plurality of multiplexers connected to a plurality of local antennas and selectively enabling with an RF signal the plurality of local antennas using the plurality of multiplexers to perform RFID interrogation on a plurality of RPID tags. The method further may include acquiring inventory information based on the RPID interrogation, wherein the method may include transmitting an identification (ID) request command to each of a plurality of multiplexers during an ID acquisition state. The ID request command may activate multiplexers in a transmission range. The method further may include identifying, using the plurality of multiplexers, antenna arrays available to acquire RPID tag information. The method also may include initiating an inventory acquisition process wherein each of a plurality of local antennas of the antenna arrays is selectively activated to acquire the RFID tag information and is to set an RF switch of each antenna array to a pass through mode during the ID acquisition state.

### BRIEF DESCRIPTION OF THE DRAWINGS

For a better understanding of various embodiments of the invention, reference should be made to the following detailed description that should be read in conjunction with the following figures wherein like numerals represent like parts.
Figure 1 is a block diagram of an RFID system in connection with which various embodiments of the invention may be implemented.
Figure 2 is a block diagram of another RFID system in connection with which various embodiments of the invention may be implemented.
Figure 3 is a block diagram of an embodiment of an RFID tag for use in an RFID system.
Figure 4 is a block diagram of another embodiment of an RFID tag for use in an RFID system.
Figure 5 is a block diagram of an RFID communication system that may controlled by various embodiments of the invention.
Figure 6 is a flowchart of a method for performing an RFID item level inventory in accordance with various embodiments of the invention.
Figure 7 is a perspective view of an inventory system that may be controlled by various embodiments of the invention.
Figure 8 is a flowchart of a method in accordance with various embodiments of the invention for controlling the acquisition of information during an RFID item level inventory.

### DETAILED DESCRIPTION OF THE INVENTION

For simplicity and ease of explanation, the invention will be described herein in connection with various embodiments thereof. Those skilled in the art will recognize, however, that the features and advantages of the various embodiments may be implemented in a variety of configurations. It is to be understood, therefore, that the embodiments described herein are presented by way of illustration, not of limitation.

In general, various embodiments of the invention provide a method and system for performing an item level inventory. The item level inventory is generally performed using radio frequency (RF) controlled multiplexers. Thus, the various embodiments may provide a method for obtaining real time inventories of items tagged with RFID identifiers.

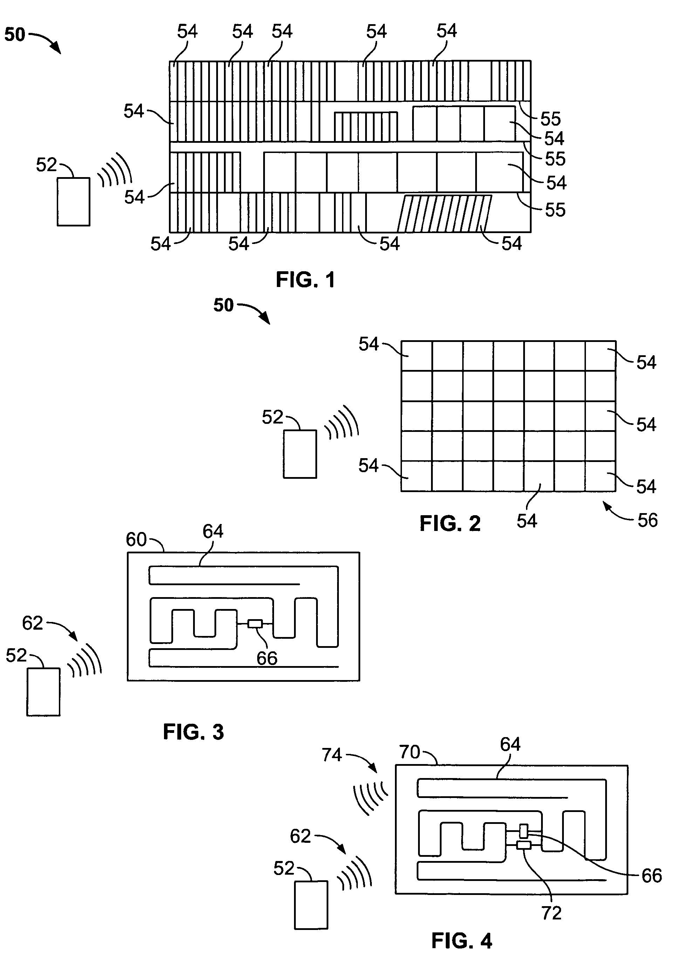

Specifically, and referring to Figures 1 and 2, various embodiments of the invention may be implemented in connection with or control the acquisition of information from different types of RFID systems, including, for example an RFID system 50. The RFID system 50 may include an RFID communication device, such as an RFID reader or interrogator 52 (which optionally also may include an RFID encoder) and a plurality of identification devices (not shown), for example, a plurality of RFID tags connected to or integrated with different objects 54 (e.g., DVDs or CDs). The objects 54 may be supported by support structures, for example, a plurality of shelves 55 (e.g., movable shelves on peg board). The RFID interrogator 52 and RFID tags may communicate via radio frequency (RF) and generally operate in accordance with known RFID communication methods. For example, as shown in Figure 1, the objects 54 may be supported on the plurality of shelves 55 with each object 54 having attached thereto or integrated therewith one or more RFID tags as is known. For example, the objects 54 may be products, such as retail products and the plurality of shelves 55 may form a display for displaying the objects 54. It should be noted that the objects 54 may be of different size and shape. Additionally, the objects 54 may be constructed of different materials with the RFID tags located on the outside or within the product or product packaging as is known.

As another example, as shown in Figure 2, a plurality of objects 54 may be located within a support structure 56. For example, the plurality of objects 54 may be boxes or cases and the support structure 56 a crate/pallet or similar structure for transporting the structure (e.g., a plurality of pharmaceutical containers within one or more pallets). The RFID interrogator 52 may be used to communicate with RFID tags connected to the objects 54 while the support structure 56 is stationary or in motion.

In various embodiments, RFID tags 60 may be passive radio reflective identification tags or passive RFID tags as shown in Figure 3. The passive RFID tags 60 do not include a battery or other power source and when radio waves 62 from the RFID interrogator 52 are detected by an antenna 64 of the RFID tag 60, the energy is converted by the antenna 64 into electricity that can power up, for example, a processor, such as a microchip 66 in the RFID tag 60. The RFID tag 60 is then able to communicate, and more particularly, transmit to the RFID reader 52 information stored in the microchip 66. For example, the information transmitted may include the type of object to which the RFID tag 60 is connected, including, for example, a serial number, the time and date of the transmission, the location of the RFID tag 60 transmitting the information, etc. and which is generally referred to herein as RFID tag information.

In other various embodiments, RFID tags 70 may be active radio reflective identification tags or active RFID tags as shown in Figure 4. The active RFID tags 70 also include a transmitter 72 to communicate, and more particularly, transmit (as opposed to reflecting back) signals 74 to the RFID reader 52 having the RFID tag information. The active RFID tags 70 use a battery (not shown) or other power source (e.g., optically powered) to transmit the signals 74 to the RFID reader 52.

It should be noted that the objects 54 shown in Figures 1 and 2, or other objects may include only active RFID tags, only passive RFID tags or a combination of active and passive RFID tags. A determination of which type of RFID tag to use may be based on the particular application, for example, the distance over which the RFID tags must be detected (e.g., long distance versus short distance). This may determined, for example, based on the type of products and location of the products having the RFID system implemented in connection therewith.

It should be noted that the RFID interrogator 52 may be a stand alone unit, for example, a portable or handheld unit or may be integrated with another communication device, such as mobile or cellular telephones, personal digital assistants (PDAs), Blackberry devices, etc. Alternatively, the RFID interrogator 52 may be formed as part of a backplane as described in detail below. Further, components within, for example, a cellular telephone, such as the transceiver, processor and/or software may be modified to provide the same functionality and operation of the RFID interrogator 52. Still other alternatives include a plug-in or add-on unit, such as, a plug-in module for a PDA that includes therein the RFID interrogator 52.

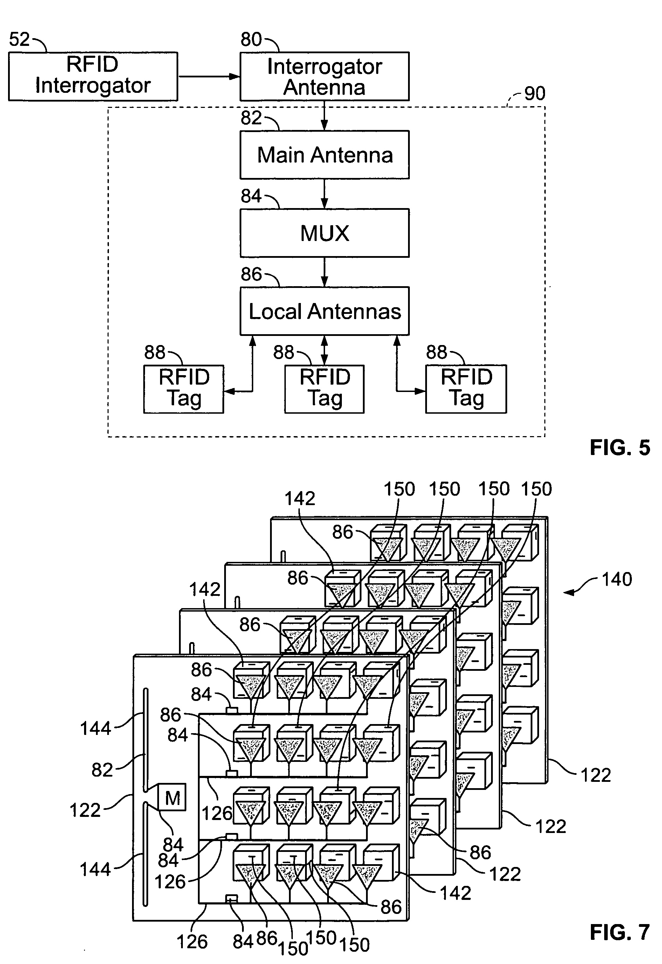

In various embodiment, the RFID interrogator 52 may include an interrogator antenna 80 as shown in Figure 5, which may comprise one or more antenna elements or coils. The interrogator antenna 80 is configured to communicate with a main antenna 82 of an RFID inventory communication system 90. The communication between the interrogator antenna 80 and the main antenna 90 may be provided through any type of wireless RFID communication link using any type of RF signals with any type of protocol. The main antenna is connected to one or more multiplexers 84 that are connected to one or more local antennas 86. The one or more local antennas 86 each communicate with one or more RFID tags 88 using any known RFID communication method. It should be noted that the local antennas 86 may form one or more antenna arrays with a main RF switch (not shown) provided for each of the antenna arrays to allow selection of the antenna array for activation or pass through of the received signals. Additionally, the multiplexers 84 may include or be configured to operate as switches and have control lines that may be activated to select different local antennas 86 or an antenna array.

In operation, and referring to the one or more multiplexers 84, these devices may be configured as switches to control switching between the local antennas 86. The one or more multiplexers 84 may operate such that the multiplexers 84 appear as passive RFID tags to the RFID interrogator 52. The RFID interrogator 52 transmits via the interrogator antenna 80 at least one of data and power to the main antenna 82. For example, a high frequency signal may transmit RFID control commands to control the switching and interrogation of the RFID tags 88 via the local antennas 86 and a low frequency signal may transmit power to the one or more multiplexers 84. Specifically, the one or more multiplexers 84 may not include a battery or other power source and when radio waves from the RFID interrogator 52 or other RFID transmitter (as is known) are detected by the main antenna 82, the energy is converted into electricity that can power up the one or more multiplexers 84. For example, a rectifier and regulator configuration may be used to derive DC power from the RF field of the RFID interrogator 52. The one or more multiplexers are then able to control, for example, switching and communication between the local antennas 86 and the RFID tags 88. The one or more multiplexers 84 may be configured in different manners. One configuration for the one or more multiplexers 84 is described in co-pending U.S. patent application Serial Number 11/520,123, assigned to the assignee of the present application. It should also be noted that the power signal from the RFID interrogator 52 also may power any passive RFID tags 88.

The one or more multiplexers 84 may each include a unique identification number and may be controlled by RFID interrogator commands from the RFID interrogator 52. For example, a write command from the RFID interrogator 52 may be addressed to one or more of the multiplexers 84 to power and control the switching of the one or more multiplexers 84.

Various embodiments may be implemented in different applications to communicate using an RFID system and to acquire, for example, inventory information, which may be provided real-time or updated automatically (e.g., periodically performing interrogation of a plurality of RFID tags). For example, an RFID shelf inventory system may be provided as described in co-pending U.S. patent application entitled "Radio Frequency Identification (RFID) System for Item Level Inventory" having Serial Number 11/520,123, assigned to the assignee of the present application. The various embodiments are not limited to, for example, shelf inventories. For example, RFID inventories of pallets, moving objects, boxes, etc. may be performed.

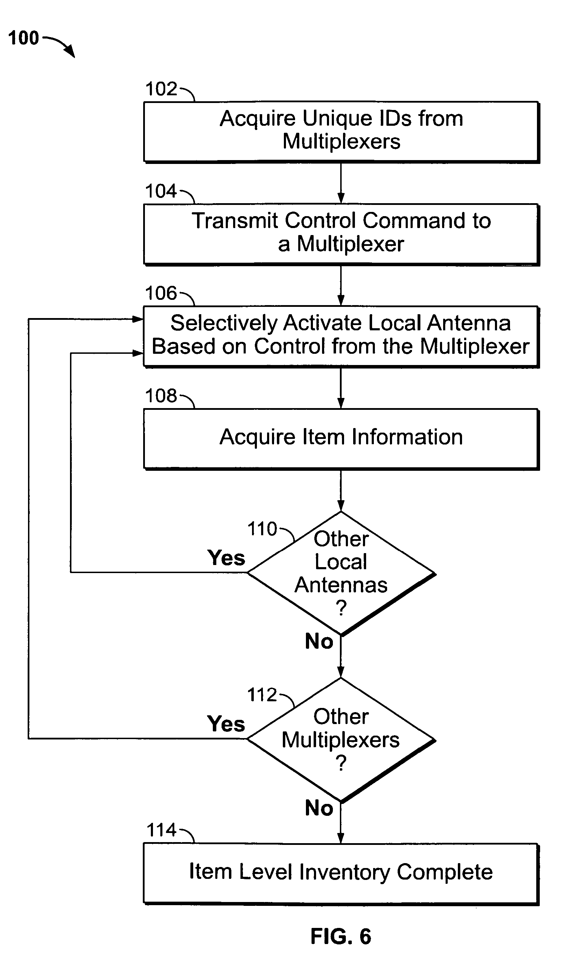

In general, the various embodiments provide a method 100 as shown in FIG. 6 for performing an RFID item level inventory. The method 100 may include at 102 transmitting a signal to acquire unique IDs form each of a plurality of multiplexers, for example, associated with different levels of a shelf unit or different rows in a pallet. This may include communicating with the plurality of multiplexers via an interface device that includes an antenna external to, for example, the pallet (e.g., may be exposed on the exterior of the pallet packaging). Essentially, an RFID interrogator reads the unique IDs from each of the multiplexers. Once the unique IDs are known, the individual multiplexers may be individually and selectively controlled and/or addressed. More particularly, thereafter at 104, control commands may be transmitted from the RFID interrogator to a first identified multiplexer. The RFID interrogator may write to the first multiplexer device a command to control operations of local antennas connected to the multiplexer. For example, the RFID interrogator may issue a command for the multiplexer to select a first local antenna in an array of local antennas controlled by the first multiplexer. The array of local antennas may be positioned, for example, at intervals along a shelf or at intervals between rows of a pallet. The intervals may be fixed, varied or selected based on the positioning of items to be inventoried.

The local antennas may be selectively activated by the first multiplexer. For example, a first local antenna may be activated to transmit an RFID interrogation signal using any know RFID transmission scheme to activate RFID tags associated with items on a row of the shelf or pallet. It should be noted that the RFID interrogation signal originated from an RFID interrogator. The RFID tags respond with item or product information as is known. For example, Electronic Product Codes (EPCs) and/or Universal Product Codes (UPCs) are read for each of the items as stored in the RFID tags. Thereafter, a determination is made at 110 as to whether other local antennas are connected to the first multiplexer. If other local antennas are connected to the first multiplexer then the local antenna is selectively activated at 106. This process is repeated using each of the local antennas associated with the first multiplexer. If a determination is then made at 110 that no more local antennas are connected to the first multiplexer, a determination is made at 112 as to whether other multiplexers are present. If other multiplexers are present, for example, provided as part of the shelf unit or in the pallet, such as in another row, the local antennas connected to that multiplexer, for example, a second multiplexer, third multiplexer, etc. are activated at 106. It should be noted that the multiple multiplexers may be controlled by a main multiplexer. If no other multiplexers are present, then the item level inventory is completed at 114. The item information acquired may then be communication, for example, to an inventory management program, an item reordering system, a statistics system, etc.

Thus, in operation, the RF interrogator 52 (shown in Figures 1 and 2) may perform an inventory information acquisition process on a pallet 140, as shown in Figure 7, as follows:
1. Read each of the unique IDs from the multiplexer 84 associated with each of a plurality of interface devices 122. The interface devices may be manually or automatically inserted between rows of cases on the pallet 140 and include a plurality of multiplexers 84 and local antennas 86.
2. Write to the a first multiplexer 84, for example, associated with the interface device 122 between the bottom two rows of cases, a command to select a first local antenna 86 in an array (e.g., row) and read or acquire the EPC codes from one or more RFID tags 150 communicating with the local antenna 86 (e.g., interrogated by the local antenna 86). It should be noted that one or more RFID tags 150 may be located within a particular portion of the pallet (e.g., within a box) at different positions.
3. Repeat the process in (2 above) for each local antenna 86 in an interface device 122, for example, along a row of cases.
4. Repeat the process in (2 and 3 above) for each of the interface devices 122 between each of the rows of cases.
It should be noted that this process is not limited to acquiring information from a pallet, but may be used to acquire information from other structures, objects, etc.

Thus, the various embodiments may be used, for example, to perform an RFID inventory, such that an array of multiplexed antennas are controlled using the same RF channels and air protocols as the RFID tags being inventoried. It should be noted that the various embodiments may be used in connection with different types of RFID systems operating using different RFID protocols. For example, the various embodiments are not limited to EPC Class 1 Gen 1 and EPC Class 1 Gen 2 air protocols.

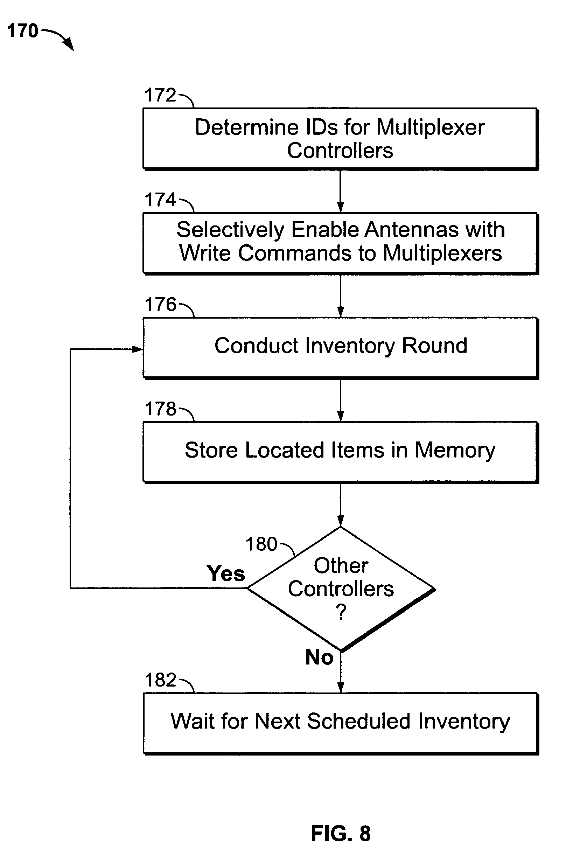

A method 170 for controlling the acquisition of information in an RFID item level inventory is shown in Figure 8. Although the method 170 is described in connection with acquiring inventory information (e.g., product quantity, product location, etc.), the method 170 may be used to acquire other types of information. Specifically, at 172 the RFID interrogator may transmit an ID request command that activates each multiplexer controller in the range of the RFID interrogator antenna(s), and in particular, a near field range of the RF transmission of the RFID interrogator and that conforms to the air protocol in use by the RFID interrogator. During this process, the RFID interrogator attempts to determine the unique ID for each multiplexer controller, which may be a unique EPC code. The multiplexer controllers respond with corresponding unique IDs. It should be noted that in the ID acquisition state, the main RF switch of each antenna array is set to a "pass through" mode such that all multiplexers in the chain of antenna arrays (e.g., all local antennas) are able to provide unique IDs. It also should be noted that the power to power up the multiplexers may be provided from the RF signal generated and transmitted by the RFID interrogator.

Then, at 174, after identifying and storing a list of available antenna arrays as determined by the multiplexers responding to the ID request command, an inventory acquisition process may be initiated to determine an inventory of items associated with each local antenna. In particular, each of the local antennas is selectively activated by write commands issued to corresponding multiplexers and as described in more detail herein. Specifically, each of the local antennas is separately activated and an identification of items having responding RFID tags in the range of the local antenna is made. Essentially, an inventory of all items with RFID tags responding to RFID interrogation by the local antenna is determined. With respect to the write command for selectively activating multiplexers connected to local antennas, a control word is written to, for example, a controller, such as a main multiplexer to determine which of the local antennas is to be enabled. An example sequence follows:
1. System writes "01" to controller ID 0XFFFF000000000000000000001.
2. The controller 0X0000000000000000000000001 switches a main RF switch to access the array of antenna connected thereto, and enables a first antenna (e.g., antenna 1) by setting the corresponding switch and multiplexer control lines to activate the first antenna (e.g., begin an RFID interrogation).
3. The system then conducts at 176 an inventory round. For example, the active controller and all RFID tags within the range of the selected antenna respond with corresponding IDs, such as:
   a. 0XFFFF000000000000000000001 (controller)
   b. 0X0000000000000000000000001 (item 1)
   c. 0X0000000000000000000000002 (item 2)
   d. 0X0000000000000000000000003 (item 3)
   e. 0X0000000000000000000000004 (item 4)
   f. 0X0000000000000000000000005 (item 5)
   g. 0X0000000000000000000000006 (item 6)
4. Thereafter, at 178, the items located during the inventory round, for example, the items located at controller 1, antenna 1, are stored in a database. This may include storing item information, such as a UPC or EPC, an item description, the location of the item based on the interrogating controller and antenna, etc.
5. At 180 a determination is made as to whether other controllers are present and available based on the initial identified list. If other controllers are available, for example, a second controller (controller 2), then the system writes a "02" to controller ID 0XFFFF000000000000000000001.
6. The second controller 0X0000000000000000000000001 switches a main RF switch to access the array of antenna connected thereto, and enables a second antenna (e.g., antenna 2) by setting the corresponding switch and multiplexer control lines to activate the second antenna (e.g., begin an RFID interrogation).
7. The system then conducts again at 176 an inventory round. For example, the active controller and all RFID tags within the range of the selected antenna respond with corresponding IDs, such as:
   a. 0XFFFF000000000000000000001 (controller)
   b. 0X0000000000000000000000007 (item 7)
   c. 0X0000000000000000000000008 (item 8)
   d. 0X0000000000000000000000009 (item 9)
   e. 0X000000000000000000000000A (item 10)
   f. 0X000000000000000000000000B(item 11)
   g. 0X000000000000000000000000C (item 12)
8. Thereafter, at 178, the items located during the inventory round, for example, the items located at controller 2, antenna 2, are stored in a database. This again may include storing item information, such as a UPC or EPC, an item description, the location of the item based on the interrogating controller and antenna, etc.
9. At 180 a determination is again made as to whether other controllers are present and available based on the initial identified list. If other controllers are available, for example, a third controller (controller 2), then the system writes a "03" to controller ID 0XFFFF000000000000000000001 and an inventory round is again performed at 176. This process is repeated for each antenna in the array controlled by 0XFFFF000000000000000000001.
10. When the first antenna array inventory is complete, the system writes "00" to controller ID 0XFFFF000000000000000000001, which sets the main RF switch of the first antenna array to "pass through" allowing access to other controllers in the chain of antenna arrays. The inventory round at 176 is again repeated for each antenna in other arrays.
11. Thereafter, if no other controllers are to be used for the inventory process, such that antennas in all arrays have been used for inventorying, then at 182 the system waits for the next scheduled inventory and repeats the method 170.
It should be noted that the memory addresses, IDs and control commands are merely exemplary and may be modified based on the type of system, etc.

Thus, various embodiments of the invention may acquire inventory information, and allow for a perpetual RFID shelf inventory wherein communication to perform the inventory is provided wirelessly. It should be noted that the power for the controllers, such as the multiplexers, to interrogate the RFID tags may be supplied by the RF signal from the RFID interrogator. The RFID interrogator also may wirelessly activate selected local antennas to perform RFID inventory operations to identify, for example, item IDs and location (e.g., location within a rack or shelf unit).

The various embodiments or components for performing the RFID inventory may be implemented as part of one or more computer systems. The computer system may include a computer, an input device, a display unit and an interface, for example, for accessing the Internet. The computer may include a microprocessor. The microprocessor may be connected to a communication bus. The computer may also include a memory. The memory may include Random Access Memory (RAM) and Read Only Memory (ROM). The computer system further may include a storage device, which may be a hard disk drive or a removable storage drive such as a floppy disk drive, optical disk drive, and the like. The storage device may also be other similar means for loading computer programs or other instructions into the computer system.

As used herein, the term "computer" may include any processor-based or microprocessor-based system including systems using microcontrollers, reduced instruction set circuits (RISC), application specific integrated circuits (ASICs), logic circuits, and any other circuit or processor capable of executing the functions described herein. The above examples are exemplary only, and are thus not intended to limit in any way the definition and/or meaning of the term "computer".

The computer system executes a set of instructions that are stored in one or more storage elements, in order to process input data. The storage elements may also store data or other information as desired or needed. The storage element may be in the form of an information source or a physical memory element within the processing machine.

The set of instructions may include various commands that instruct the computer as a processing machine to perform specific operations such as the methods and processes of the various embodiments of the invention. The set of instructions may be in the form of a software program. The software may be in various forms such as system software or application software. Further, the software may be in the form of a collection of separate programs, a program module within a larger program or a portion of a program module. The software also may include modular programming in the form of object-oriented programming The processing of input data by the processing machine may be in response to user commands, or in response to results of previous processing, or in response to a request made by another processing machine.

As used herein, the terms "software" and "firmware" are interchangeable, and include any computer program stored in memory for execution by a computer, including

RAM memory, ROM memory, EPROM memory, EEPROM memory, and non-volatile

RAM (NVRAM) memory. The above memory types are exemplary only, and are thus not limiting as to the types of memory usable for storage of a computer program.

While the invention has been described in terms of various specific embodiments, those skilled in the art will recognize that the various embodiments of the invention can be practiced with modification within the scope of the claims.

## Claims

1. A method for performing a radio frequency identification RFID inventory, the method comprising:
selectively controlling with an RF signal (62) each of a plurality of multiplexers (84) connected to a plurality of local antennas (86);
selectively enabling with an RF signal the plurality of local antennas (86) using the plurality of multiplexers (84) to perform RFID interrogation on a plurality of RFID tags (60, 70, 88, 150); and
acquiring inventory information based on the RFID interrogation,
**characterized by**
further comprising:
controlling the acquisition of information during said RFID item level inventory
transmitting an identification ID request command to each of said plurality of multiplexers (84) during an ID acquisition state, the ID request command activating multiplexers (84) in a transmission range;
during said ID acquisition state, setting an RF switch of each array formed by said local antennas (86) to a pass through mode, such that said multiplexers are able to provide IDs,
identifying, using the plurality of multiplexers (84), antenna arrays available to acquire RFID tag information; and
initiating an inventory acquisition process wherein each of a plurality of local antennas (86) of the antenna arrays is selectively activated to acquire the RFID tag information.

2. A method in accordance with claim 1 further comprising determining identification information for each of the plurality of multiplexers (84).

3. A method in accordance with claim 2 further comprising communicating with individual ones of the plurality of multiplexers (84) based on the identification information.

4. A method in accordance with claim 1 further comprising selectively powering with the RF signal (62) the plurality of multiplexers (84).

5. A method in accordance with claim 1 wherein the selectively controlling comprises transmitting write commands to the plurality of multiplexers (84).

6. A method in accordance with claim 1 further comprising receiving the RF signal at an antenna exposed outside a container, the antenna connected to at least one of the plurality of multiplexers (84).

7. A method in accordance with claim 1 further comprising positioning an RFID interface device between stacks (122) of cases on a pallet, the RFID interface device (122) including the plurality of multiplexers (84) and local antennas (86).

8. A method in accordance with claim 1 further comprising routing control commands (104) using the plurality of multiplexers (84).

9. A method in accordance with claim 1 wherein the plurality of local antennas (86) are selectively activated using write commands from an RFID interrogator (52).

10. A method in accordance with claim 9 wherein the write commands comprise control words written to a controller for the plurality of multiplexers (84).

11. A method in accordance with claim 1 further comprising selectively setting a switch and multiplexer control line to selectively activate the antenna arrays, wherein the RFID tag information comprises information relating to one or more items (54) including at least one of a Universal Product Code UPC, an Electronic Product Code EPC, an item description, and a location of the item (54) based on an interrogating controller and antenna.

12. A method in accordance with claim 1 further comprising performing a plurality of inventory rounds to acquire the RFID tag information using each of the antenna arrays.

## Patentansprüche

1. Verfahren zum Ausführen einer Funkfrequenzidentifikations-RFID-Bestandsaufnahme, wobei das Verfahren Folgendes umfasst:
selektives Steuern mit einem HF-Signal (62) jedes einer Mehrzahl von Multiplexern (84), die mit einer Mehrzahl lokaler Antennen (86) verbunden sind,
selektives Aktivieren mit einem HF-Signal der Mehrzahl lokaler Antennen (86), indem die Mehrzahl von Multiplexern (84) verwendet wird, um RFID-Abfrage auf einer Mehrzahl von RFID-Tags (60, 70, 88, 150) auszuführen, und
Erfassen von Bestandsaufnahmeinformationen basierend auf der RFID-Abfrage,
**dadurch gekennzeichnet, dass**
es ferner Folgendes umfasst:
Steuern des Erfassens der Informationen während der RFID-Elementniveaubestandsaufnahme,
Übertragen eines Identifikations-ID-Abfragebefehls zu jedem der Mehrzahl von Multiplexern (84) während eines ID-Erfassungszustands, wobei der ID-Abfragebefehl Multiplexer (84) in einem Übertragungsbereich aktiviert,
während des ID-Erfassungszustands Einstellen eines HF-Schalters jedes Arrays, das von den lokalen Antennen (86) gebildet wird, auf Durchlassmodus, so dass die Multiplexer fähig sind, IDs bereitzustellen,
unter Verwenden der Mehrzahl von Multiplexern (84) Identifizieren von Antennenarrays, die verfügbar sind, um RFID-Taginformationen zu erfassen, und
Initiieren eines Bestandsaufnahmeprozesses, wobei jede einer Mehrzahl lokaler Antennen (86) der Antennenarrays selektiv aktiviert wird, um die RFID-Taginformationen zu erfassen.

2. Verfahren nach Anspruch 1, das ferner das Bestimmen von Identifikationsinformationen für jeden der Mehrzahl von Multiplexern (84) umfasst.

3. Verfahren nach Anspruch 2, das ferner das Kommunizieren mit einzelnen der Mehrzahl von Multiplexern (84) basierend auf den Identifikationsinformationen umfasst.

4. Verfahren nach Anspruch 1, das ferner das selektive Versorgen der Mehrzahl von Multiplexern (84) mit dem HF-Signal (62) umfasst.

5. Verfahren nach Anspruch 1, wobei das selektive Steuern das Übertragen von Schreibbefehlen zu der Mehrzahl von Multiplexern (84) umfasst.

6. Verfahren nach Anspruch 1, das ferner das Empfangen des HF-Signals an einer Antenne umfasst, die außerhalb eines Behältnisses exponiert ist, wobei die Antenne mit mindestens einem einer Mehrzahl von Multiplexern (84) verbunden ist.

7. Verfahren nach Anspruch 1, das ferner das Positionieren einer RFID-Schnittstellenvorrichtung zwischen Stapeln (122) von Kisten auf einer Palette umfasst, wobei die RFID-Schnittstellenvorrichtung (122) die Mehrzahl von Multiplexern (84) und lokale Antennen (86) aufweist.

8. Verfahren nach Anspruch 1, das ferner das Routen von Steuerbefehlen (104) unter Verwenden der Mehrzahl von Multiplexern (84) umfasst.

9. Verfahren nach Anspruch 1, wobei die Mehrzahl lokaler Antennen (86) selektiv unter Verwenden von Schreibbefehlen von einem RFID-Abfragesystem (52) aktiviert wird.

10. Verfahren nach Anspruch 9, wobei die Schreibbefehle Steuerwörter umfassen, die zu einem Controller für die Mehrzahl von Multiplexern (84) geschrieben werden.

11. Verfahren nach Anspruch 1, das ferner das selektive Einstellen eines Schalters und einer Multiplexer-Steuerleitung umfasst, um selektiv die Antennenarrays zu aktivieren, wobei die RFID-Taginformationen Informationen umfassen, die mit einem oder mehreren Elementen (54) zusammenhängen, die einen Universal Product Code UPC und/oder einen Electronic Product Code EPC und/oder eine Elementbeschreibung und/oder eine Lage des Elements (54) basierend auf einem Abfragecontroller und einer Antenne aufweisen.

12. Verfahren nach Anspruch 1, das ferner das Ausführen einer Mehrzahl von Bestandsaufnahmerunden umfasst, um die RFID-Taginformationen unter Verwenden jedes der Antennenarrays zu erfassen.

## Revendications

1. Procédé permettant d'effectuer un inventaire par identification radiofréquence RFID, le procédé comprenant :
la commande sélective grâce à un signal RF (62) de chacun d'une pluralité de multiplexeurs (84) reliés à une pluralité d'antennes locales (86),
la validation sélective grâce à un signal RF de la pluralité d'antennes locales (86) en utilisant la pluralité de multiplexeurs (84) pour effectuer une interrogation par identification RFID sur une pluralité d'étiquettes RFID (60, 70, 88, 150), et
l'acquisition d'informations d'inventaire sur la base de l'interrogation par identification RFID,
**caractérisé en ce qu'**il comprend en outre :
la commande de l'acquisition d'informations pendant ledit inventaire au niveau de l'article par identification RFID,
la transmission d'une instruction de demande d'identification ID à chacun de ladite pluralité de multiplexeurs (84) pendant un état d'acquisition de l'identification ID, l'instruction de demande d'identification ID activant les multiplexeurs (84) dans une gamme d'émission,
le positionnement, pendant ledit état d'acquisition d'identification ID, d'un commutateur RF de chaque réseau formé par lesdites antennes locales (86) à un mode de transfert de telle sorte que lesdits multiplexeurs soient capables de fournir des identifications ID,
l'identification, en utilisant la pluralité de multiplexeurs (84), de réseaux d'antennes disponibles pour l'acquisition d'informations d'étiquettes RFID, et
le lancement d'un traitement d'acquisition d'inventaire dans lequel chacune d'une pluralité d'antennes locales (86) des réseaux d'antennes est activée sélectivement pour récupérer les informations d'étiquettes RFID.

2. Procédé selon la revendication 1, comprenant en outre la détermination d'informations d'identification pour chacun de la pluralité de multiplexeurs (84).

3. Procédé selon la revendication 2, comprenant en outre la communication avec certains individus de la pluralité de multiplexeurs (84) sur la base des informations d'identification.

4. Procédé selon la revendication 1, comprenant en outre la mise en service sélective de la pluralité de multiplexeurs (84) avec le signal RF (62).

5. Procédé selon la revendication 1, dans lequel la commande sélective comprend la transmission d'instructions d'écriture à la pluralité de multiplexeurs (84).

6. Procédé selon la revendication 1, comprenant en outre la réception du signal RF au niveau d'une antenne exposée à l'extérieur d'un contenant, l'antenne étant reliée à moins l'un de la pluralité de multiplexeurs (84).

7. Procédé selon la revendication 1, comprenant en outre le positionnement d'un dispositif formant interface RFID entre des piles (122) de boîtes sur une palette, le dispositif formant interface RFID (122) incluant la pluralité de multiplexeurs (84) et d'antennes locales (86).

8. Procédé selon la revendication 1, comprenant en outre le routage d'instructions de commande (104) en utilisant la pluralité de multiplexeurs (84).

9. Procédé selon la revendication 1, dans lequel les différentes antennes locales (86) sont sélectivement activées en utilisant des instructions d'écriture provenant d'un dispositif d'interrogation RFID (52).

10. Procédé selon la revendication 9, dans lequel les instructions d'écriture comprennent des mots de commande écrits à un contrôleur pour la pluralité de multiplexeurs (84).

11. Procédé selon la revendication 1, comprenant en outre le positionnement d'un commutateur et d'une ligne de commande de multiplexeur pour activer sélectivement les réseaux d'antennes, les informations d'étiquettes RFID comprenant des informations se rapportant à un ou plusieurs articles (54) y compris au moins l'un d'un code produit universel UPC, d'un code produit électronique EPC, d'une description d'article et d'un emplacement de l'article (54) sur la base d'un contrôleur d'interrogation et d'une antenne.

12. Procédé selon la revendication 1, comprenant en outre l'exécution d'une pluralité de passes d'inventaire pour acquérir les informations d'étiquettes RFID en utilisant chacun des réseaux d'antennes.
